# EUROPEAN PATENT APPLICATION

(11) **EP 0 717 359 A2**
(43) Date of publication of application: **19.06.1996**
(21) Application number: 95308937.2
(22) Date of filing: 08.12.1995
(51) Int. Cl.: G06F 12/08, G06F 9/38

(54) **Register cache for a computer processor**

(30) Priority: 15.12.1994 US 356596
(71) Applicant: SUN MICROSYSTEMS, INC., Mountain View, CA 94043 (US)
(72) Inventor: Yung, Robert, Fremont, California, 94555 (US); Wilhelm, Neil, Menlo Park, California 94025 (US)
(74) Representative: Hogg, Jeffery Keith

(57) **Abstract**

A computer processor for executing instructions that specify certain source register values and destination register values from a register file is disclosed. The processor includes a memory hierarchy including, from top to bottom, a register cache, a memory for storing the register file, instruction and data caches, main memory, and disk storage. The register cache operates on the principle of locality, and is used to store register values that were (1) recomputed by recently executed instructions; and (2) register values that are likely to be reference by instructions about to be dispatched for execution. The register cache may assume a number of configurations, including directed mapped, set associative, or fully associative.

## Description

### BACKGROUND OF THE INVENTION

### Field of the Invention

The present invention relates to computers and, more particularly, to a computer processor having a register cache for caching register values.

### Description of Related Art

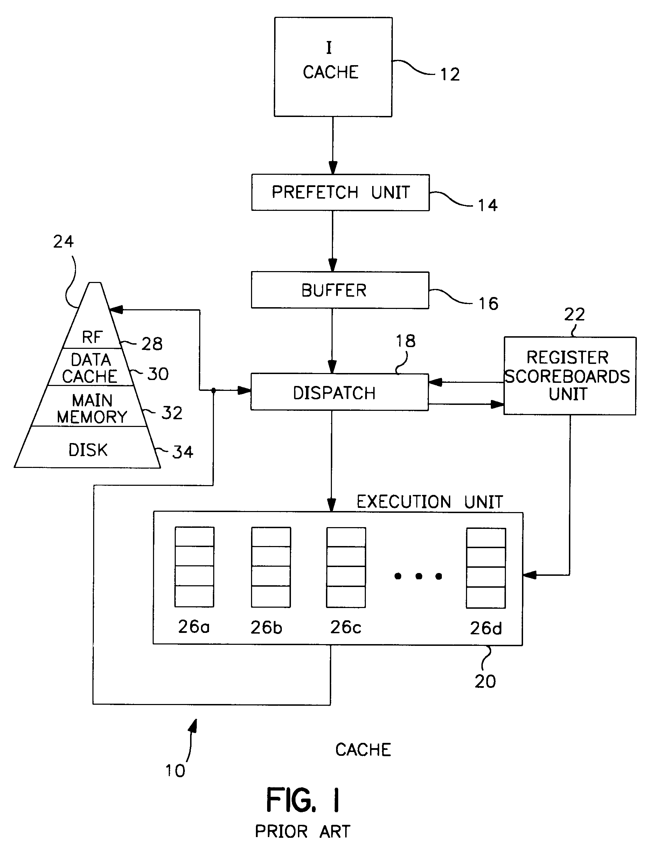

Referring to Figure 1, a computer processor according to the prior art is shown. The processor 10 includes, among other elements, a instruction I cache 12, a instruction prefetch unit 14, an instruction buffer 16, a dispatch unit 18, an execution unit 20, a register scoreboard unit 22, and a memory hierarchy 24. The execution unit includes one or more pipelines 26a through 26z. The number (z) of pipelines 26 refers to the "scalarity" of the processor 10. Since super-scalar processors can execute multiple instructions simultaneously, the throughput of a super-scalar processor is significantly increased. The memory hierarchy 24 includes, from top to bottom, a register file (RF) 28, data cache 30, the I cache 12, main memory 32, disk storage 34, and typically external memory (not shown). The main memory 32 and disk storage 34 typically store both data and instructions of a program.

The memory hierarchy 24 includes multiple levels of memory with different speeds and sizes. The faster, more expensive memory, such as the register file 28, the data cache 30, and the I cache 12 are provided at the top of the hierarchy 24 close to the execution unit 20. The slower, less expensive memory, such as main memory 32 and disk storage 34, are provided at the bottom of the memory hierarchy 24. The goal of the memory hierarchy 24 is to provide the processor 10 with as much memory as is available in the cheaper memory technology, while providing the access speed offered by the faster memory technology.

An instruction set is a collection of predefined elemental instructions. Instruction sets are typically organized into groups of instructions of the same type or class, for example: floating point, integer, load/store operations, branch, etc. A computer program is a number of the elemental instructions, selected from the instruction set, and arranged by the programmer into a certain sequence called the program order. When the program is executed in program order, the task intended by the program is carried out by the processor 10. Instructions appearing first in the program order are considered "older" instructions relative to subsequent instructions which are considered "younger" instructions.

The characteristics of the register file 28 are dictated by the instruction set. In other words, the instruction set defines the type and size of registers in the register file 28 available to the programmer. For example, the SPARC instruction set V9, developed by Sun Microsystems, Inc., Mountain View, CA, defines an integer register file having a maximum of five hundred and twenty (520) registers and a separate floating point register file, having up to thirty two (32) registers, and each register being sixty-four (64) bits wide. (Note, for the sake of simplicity, Figure 1 illustrates a "generic" register file 28, and does not shown separate integer and floating point register files.)

When writing a computer program, a programmer may use instructions that specify certain registers in the register file 28. Instructions may specify registers as either source registers or a destination register. Source registers contain the source values needed by an instruction to be executed. The destination register is used to store the result value of the instruction after it has been executed. Table I below provides several examples of instructions that specify source and destination registers.

**Table I**

| Instruction | Description |
|---|---|
| ADD R1, R2 --> R3 | The sum of the values contained in source register R1 and source register R2 are stored in destination register R3. |
| SUB R3, R4 --> R5 | The difference of the value in source register R3 minus the value in source register R4 is stored in destination register R5. |
| MOV R5 --> R6 | The value of source register R5 is moved to destination register R6. |

During operation, the instructions of a program to be executed by the processor 10 are loaded into the I cache 12. The prefetch unit 14 fetches the instructions from the I cache 12, and places them into the buffer 16 in program order. The instructions in the buffer 16 are thus available to the dispatch unit 18.

The dispatch unit 18 is capable of dispatching up to (z) instructions to the execution unit 20 during any given cycle. The actual number of dispatched instructions per cycle, however, is dependent on two factors: (1) resource dependencies; and (2) register dependencies. For each cycle, the dispatch unit 18 first defines a subset or window of instructions in the buffer 16 equal to the scalarity (z) of the execution unit 20. Resource dependencies and register dependencies among the (z) instructions are then checked, and resolved in the following procedures:
1. In resolving resource dependencies, the dispatch unit 18 compares the resources available among the pipelines 26a through 26z of the execution unit 20 with the instructions in the current window. For example, if the window includes three floating point (FPU) instructions, and the execution unit 20 only has two FPU pipelines 26 available, then one of the FPU instructions can not be dispatched in the current cycle. In effect, the dispatch unit 18 draws a "resource line" in the window, and only those instructions below the resource line are considered for dispatch. Instructions above the resource line are considered for dispatch in a subsequent cycle.
2. In resolving register dependencies, the dispatch unit 18 ascertains the source registers needed by the instructions below the resource line in the window. The needed registers are then compared with those in the register scoreboard 22, which maintains a current record of all the register values being recomputed in the pipelines 26a through 26z. An instruction is said to be dependent if it needs a register value that is currently being recomputed by older instructions in one of the pipelines 26. If an instruction below the resource line has a dependency conflict, the dispatch unit 18 may stall the dispatch of that instruction. When the register value in conflict becomes available, it is bypassed directly to dispatch unit 18, and the stalled instruction is then dispatched to the appropriate one of the pipelines 26a through 26z.

If an instruction below the resource line has no register conflicts, meaning the needed register value(s) are not being recomputed, then the register value(s) are obtained directly from the register file 28. The dispatch unit 18, in resolving resource and data dependencies, may issue fewer instructions than the processor 10 is capable of executing during a given cycle. Nevertheless, this operation is necessary to maintain proper execution of the instructions of the program.

After instructions are executed, recomputed register values are stored in the register file 28. The results of the executed instructions, contained in the destination registers of the executed instructions, exit the pipelines 26a through 26z. The results are then bypassed to the dispatch unit 18 if needed in the manner described above. The results are also used to update the register file 28 so that up-to-date register values not being recomputed in the execution unit 20 are available for younger (subsequent in program order) instructions.

State of the art microprocessors, such as the above-mentioned SPARC processors, the Power PC™ from Motorola Corporation and International Business Machines, and the Alpha™ chip from Digital Equipment Corporation share a number of similarities. Each of these processors have up to four (z=4) pipelines 26 in their respective execution units 20. This means that each processor is capable of issuing up to four instructions per cycle. Because a typical instruction has two source register operands and one destination register operand, up to eight source operand values may be needed at one time. Furthermore, up to four register values may be written back to the register file 28 during a cycle. Each of these processors also use an on chip static random access memory (SRAM) array for implementing their respective register files 28. The implementation of the register file 28 in a SRAM array, particularly in a super-scalar processor, is problematic for a number of reasons.

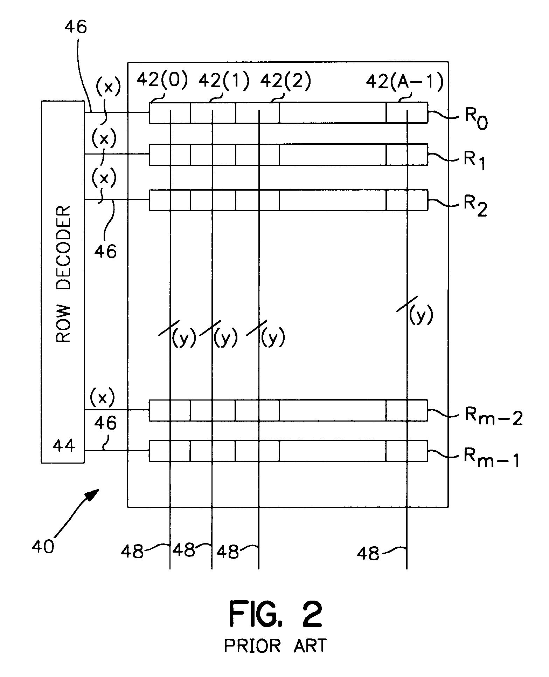

Referring to Figure 2, a block diagram of an SRAM memory array typically used for storing registers of the register file 28 is shown. The memory array 40 includes (m) rows. Each row Rₒ through Rₘ₋₁ corresponds to a register in the register file 28. Each row R includes (n) memory cells 42₀ through 42ₙ₋₁, where (n) equals the width of the word size used by the processor 10. In the above processors, the word size is either (n=32) bits or (n=64) bits, depending on the machine. The memory array 40 also includes a row decoder 44. A plurality (x) of word lines 46 are coupled between the row decoder 44 and each row Rₒ through Rₘ₋₁ respectively. The memory array 40 typically includes a plurality (y) of differential bit lines 48 associated with each column of memory cells 42, running the height of the memory array 40. (Note, the plurality (x) of word line 46 and the plurality (y) of differential bit lines are illustrated as only a single line respectively for the sake of clarity.)

With the above-mentioned four-scalar processors, which issue up to four instructions per cycle, eight read word lines and four write words lines, or a total of twelve (x = 12) word lines 46, are needed for each row Rₒ through Rₘ₋₁ in the array. Further, eight differential read bit lines and four differential write bit lines, or a total of twenty-four (y=24) bit lines are needed for each memory cell 42. The eight read word lines and the eight read differential bit lines are needed to cover the possibility that the same register value may be needed for the eight source operands of the four instructions that can be dispatched in a given cycle. Similarly, four write word lines and four differential write bit lines are needed to write up to four recomputed register values into the register file 28 per cycle.

The SRAM memory array just described creates a number of problems. For each cell 42 in the array, two pass transistors are needed for each combination of a word line/differential bit line pair. As a result, the size or pitch of each memory cell is relatively large because of the number of word lines, bit lines, and pass transistors associated with each memory cell. The increased pitch size of the individual cells means that the overall size of the memory array is larger and occupies a larger percentage of the area on the processor die. This detrimentally affects manufacturing yields of the processor, and drives up fabrication cost. The relatively large size of the memory array also adversely affects the average time required to access a register value in the register file 28 for several reasons. The longer word lines and bit lines, due to the overall larger size of the array, increases the average access time. The number of pass transistors, word lines, and bit lines associated with each cell tends to increase the capacitive loading on each cell. The increased capacitive load on each cell makes it more difficult for the finite charge stored in each cell to drive the appropriate differential bit line pair. All the above problems are exacerbated with an increase in the scalarity of the processor 10. For example, a five scalar machine (z=5) would require ten read word lines, five write word lines, and five pairs of differential write bit lines, all of which further compound the above stated problems.

The Applicants believe that implementing the entire register file 28 in an on chip SRAM memory array 40 is a "brute force" approach to the problem of providing needed register values to the instructions about to be dispatched. As previously noted, the SRAM memory array 40 is relatively slow and is difficult to manufacture. In a four-scaler processor, statistical analysis shows that on average, fewer than two register values are accessed from the register file 28 per cycle. A high percentage of the read/write circuitry of the SRAM array 40 is this unused during a given cycle. Further, in executing a particular program, only a small percentage of the total number of registers in the register file 28 are typically accessed. The majority of the entries in the register file 28 are thus not accessed. The Applicants therefore consider the SRAM memory 40 used store the register file 28 to be an oversized, under-utilized resource, that occupies relatively too much space that could otherwise be dedicated to more productive functions on the die.

Several design trends are proliferating in the processor industry: greater scalarity; reduced cycle times; smaller die sizes; larger register files; and wider word widths. The implementation of the register file 28 in the SRAM memory array 40, with its complex read/write circuitry, relatively large size, and relatively slow access speeds, represents a substantial barrier to improving the performance in each of these attributes. In fact, the Applicants believe that the SRAM memory array 40 as described above has created a design impediment that in the next generation of processors, may discourage or even prevent further advancements in scalarity, an increase in word size, an increase in the size of the register file, and/or a reduction of cycle time. Accordingly, an improved apparatus and method for accessing register values is needed.

### SUMMARY OF THE INVENTION

The present invention provides a computer processor for executing instructions that specify certain source register values and destination register values selected from a register file. The processor includes a memory hierarchy including, from top to bottom, a register cache, a memory for storing the register file, instruction and data caches, main memory, and disk storage. The register cache operates on the principle of locality, and is used to store register values that were (1) recomputed by recently executed instructions; and (2) register values that are likely to be reference by instructions about to be dispatched for execution. The register cache may assume a number of configurations, including directed mapped, set associative, or fully associative.

The register cache is positioned adjacent to a dispatch unit and an execution unit of the processor. A register scoreboard unit is associated with the dispatch unit and maintains a record of all the register values currently being recomputed in the execution unit of the processor. During operation, the dispatch unit ascertains the register values needed by a group of instructions considered for dispatch. The dispatch unit, first checks the register scoreboard to determine if any of the needed register values are currently being recomputed in the execution unit. If a needed register value is being recomputed, the recomputed register value is or will be provided directly from the execution unit to the dispatch unit in a bypass operation. If the needed register value is not available by a bypass operation, the dispatch unit accesses the register cache. If a hit occurs, the register cache provides the needed register value to the dispatch unit. If a miss occurs, the needed register value is obtained from the memory containing the register file. The overall register caching effect is therefore achieved by the combination of bypassing and the register cache. Bypassing provides the correct values of recently recomputed register values. The register cache provides register values that have recently exited the execution unit.

The register cache of the present invention provides a number of advantages and solves a number of problems associated with the prior art. Statistical studies indicate that the register cache, when properly sized and managed, maintains a hit rate in the order of ninety to ninety-five percent (90 to 95%) or better. With such a high hit rate, a vast majority of requests for register values by the dispatch unit are satisfied by either a bypassing operation or the register cache. The memory containing the register file is therefore rarely accessed.

The Applicants believe that with the various embodiments taught in the present application, many of the impediments confronting the designers of the next generation of processor chips are overcome. The register cache of the present invention offers a for more elegant solution to accessing register values than that offered by the brute force SRAM implementation described in the prior art. In particular, the register cache is simpler in design on the processor chip, easier to manufacture, occupies less space on the die, and offers a faster average access time, all of which aid in the design of processors having greater scalarity, reduced cycle time, and a smaller die. Further, the simplicity of the register cache also permits the use of larger register files and word widths.

### DESCRIPTION OF THE DRAWINGS

The objects, features and advantages of the system of the present invention will be apparent from the following description in which:
**Figure 1** illustrates a block diagram of a computer according to the prior art.
**Figure 2** illustrates a block diagram of an SRAM array used for the register file of prior art computer systems.
**Figure 3** illustrates a block diagram of a computer according to the present invention.
**Figure 4** illustrates a block diagram of a direct mapped register cache of the present invention.
**Figure 5** illustrates a block diagram of a fully associative register cache of the present invention.
**Figure 6** illustrates a register cache having a process identifier for each register cache entry according to the present invention.
**Figure 7** illustrates a register cache memory implemented using flip flop memory locations according to the present invention.

### DESCRIPTION OF THE PREFERRED EMBODIMENT

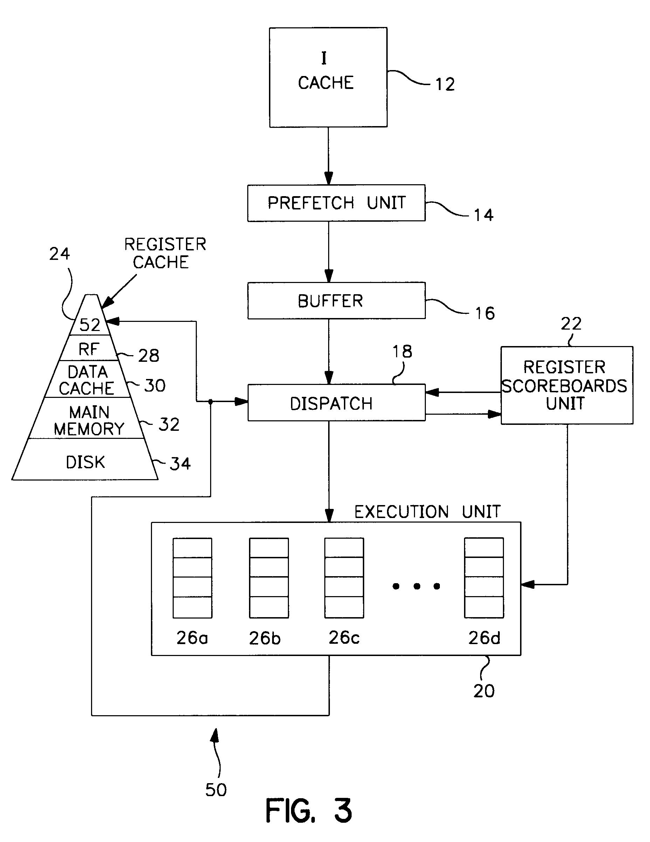

Referring to Figure 3, a block diagram of a computer processor according to the present invention is shown. The computer processor 50 includes an I cache 12, a prefetch unit 14, a buffer 16, a dispatch unit 18, a execution unit 20, including a number of pipelines 26a through 26z, and a register scoreboard unit 22. The computer processor 50 also includes a memory hierarchy 24 including a register cache 52, a register file 28, a data cache 30 and the I cache 12, main memory 32, and disk storage 34. Like elements that perform the same or similar functions in Figure 3 are designated by the same reference numerals as those in Figure 1, and therefore are not described in detail herein. It should be noted that the register file 28 refers to the logical set of registers available to the programmer and is defined by the instruction set used by the processor 50. It does not refer to the physical memory, such as an SRAM used to store the individual registers of the register file 28.

The register cache 52 is located on top of the memory hierarchy 24. The register cache 52 is positioned next to the dispatch unit 18 and the execution unit 20. The register cache 52, at any given point of time, holds a subset of register values of the register file 28. The subset of register values in the register cache 52 typically include register values that are soon to be needed by instructions about to be dispatched by the dispatch unit 18, or were recently recomputed by executed instructions exiting the execution unit 20.

For example, when an instruction in the dispatch unit 18 needs a register value that is not currently in the register scoreboard unit 22 (i.e., not being recomputed in the execution unit 20), the dispatch unit 18 accesses the register cache 52. If the request results in a "hit", meaning the needed register value is in the register cache 52, then the register value is provided directly to the instruction in the dispatch unit 18 without accessing the register file 28. Otherwise, the needed register value is obtained from the register file 28. Similarly, when a recomputed register value exits the execution unit 20 after an instruction is executed, the recomputed register value is stored in both the register cache 52 and the register file 28. The register file 28 may be written to in accordance with either a write-through or a write-back policy. It should be noted that if a register value is being recomputed in the execution unit 20 and is needed by a dependent instruction in the dispatch unit 18, then the instruction is typically stalled and the needed register value is obtained by a bypassing operation as described in the background section, without accessing the register cache 52.

Operation of the register cache 52 relies on the principle of locality. There are two types of locality, temporal and spatial. With temporal locality, if a register value is referenced, there is a high likelihood that this same register value will soon be referenced again. In other words, if a register value was recently referenced, the register value should be placed into the register cache 52 because of the high probability that it will be referenced again. With spatial locality, if a register value is referenced, there is a high likelihood that adjacent register values will also be referenced. For example, if register R₃ is accessed, there is a high probability that adjacent registers R₂ and R₄ will also soon be accessed, and therefore should be placed in the register cache 52. This phenomena is due to the observation that most instructions are often accessed sequentially, and, therefore, show a high degree of spatial locality. Accordingly, at any point in time during the execution of a program, only a small percentage of the total number of register values in the register file 28 need to be present in the register cache 52.

According to various embodiments of the invention, the register cache 52 may be organized as either a direct mapped, fully associative, or a set associative cache. Each of these types of caches along with a several types of memory arrays and replacement algorithms to implement the register cache 52 are described below.

### A. DIRECT MAPPED

A description of the direct mapped register cache embodiment of the present invention is best described using an example. Consider a register file 28 having one hundred and twenty eight (128) registers in a two scalar (z=2) processor 50. Since in this example the processor 52 is a two scalar machine, the dispatch unit 18 may read up to four source register values and write up to two destination register values to the register cache 52 per cycle.

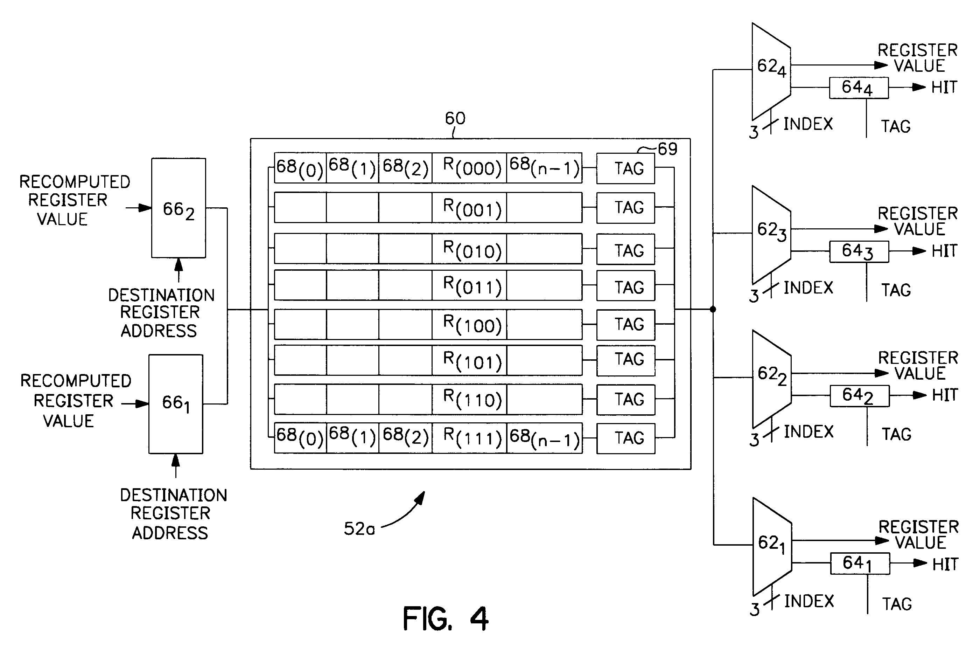

Referring to Figure 4, a block diagram of a direct mapped register cache 52a of the present invention is shown. The direct mapped register cache 52a includes a memory array 60, four multiplexors 62₁ through 62₄, and two decoder circuits 66₁ and 66₂. The memory circuit includes, in this embodiment, eight register value entries contained in rows R₀₀₀ through R₁₁₁. Each row includes (n) memory locations 68, where (n) equals the width of the word size used by the processor 50. Each row also includes a tag field 69 for storing the tag of the register value contained in the row. Since the register cache 52a is direct mapped, each of the one hundred and twenty-eight register values is mapped into exactly one location in the register cache 52a. That is, all the register values having a register address with an index (the three least significant bits) equal to (000) are mapped into row R₀₀₀. Similarly, all register values with a register address having a index of (001), (010), (011), (100), (101), (110), and (111) are mapped into rows R₀₀₁, R₀₁₀, R₀₁₁, R₁₀₀, R₁₀₁, R₁₁₀, and R₁₁₁ respectively.

During operation, the dispatch unit 18 attempts to issue two instructions per cycle. With a two scalar processor, up to four source register values may be needed. Before the two instructions are issued, the dispatch unit 18 determines if any source values are needed from the register cache 52a. If no source values are needed, either because the two instructions do not define source values or the needed source values will be obtained by a bypassing operation, then the register cache 52a is not accessed. On the other hand, if one source value is needed from the register cache 52a, the dispatch unit 18 applies the register address, including the index and tag, for the needed source value to the register cache 52a. The index of the register address are applied to the select input of multiplexor 62₁. In response to the index, the multiplexor 62₁ selects the matching one of the eight rows R₍₀₀₀₎ through R₍₁₁₁₎ in the register cache 52a. The tag held in the tag field 69 of the selected row is then compared by compare circuit 64₁ to the tag portion of the requested register address. A match indicates a "hit", and the needed register value is provided to the dispatch unit 18. A mismatch indicates a miss, and the requested register value is obtained from the register file 28. A similar operation takes place in parallel with multiplexors 62₂, 62₃ and 62₄ and compare circuits 64₂, 64₃ and 64₄ if the instructions in the dispatch unit 18 needs two, three or four source operands respectively during a given cycle.

During a write operation, the decoder circuits 66₁ and 66₂ are each responsible for selecting a row R₍₀₀₀₎ through R₍₁₁₁₎ for writing a recomputed register value into the register cache 52. Upon completion of a cycle, the address of a first recomputed register value is applied to the decoder circuit 66₁, which selects the appropriate row R₍₀₀₀₎ through R₍₁₁₁₎ based on the index of the address. The recomputed register value, along with the corresponding tag, are then stored in the selected row. If a second register value is recomputed during a cycle, the decoder circuit 66₂ operates in a similar manner in updating the register cache 52b.

### B. FULLY ASSOCIATIVE

A description of the fully associative register cache is best described using the processor 50 which the same characteristics as described above with respect to the direct mapped cache 52a. Again, the register file 28 includes one hundred and twenty eight registers (128), the register cache 52 includes eight (8) entries, and the processor 50 is a two scalar (z=2) machine, where up to four source values may be needed from the register cache 52 and up to two (2) register values may be written to the register cache 52 per cycle.

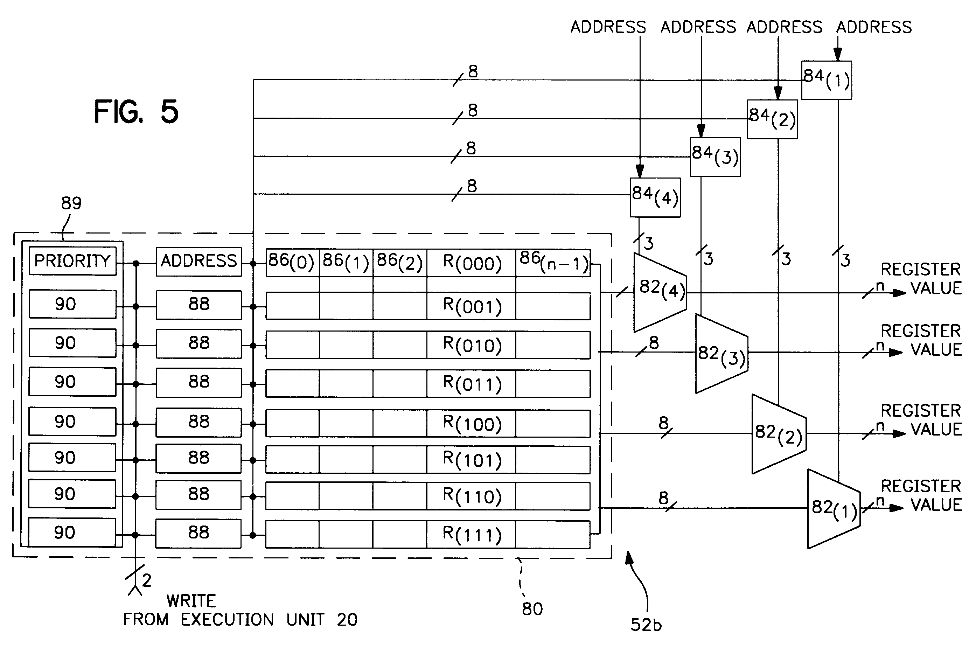

Referring to Figure 5, a block diagram of the fully associative register cache 52b is shown. The register cache 52b includes a memory array 80, four read multiplexors 82₁ through 84₄, and four compare circuits 84₁ through 84₄. The memory array 80 includes eight rows R₍₀₀₀₎ through R₍₁₁₁₎ for storing eight register values respectively. Each row R includes (n) memory locations 86, where (n) equals the width of the word size used by the processor 50. Associated with each row R is an address field 88 for holding the register address for the register value stored in the corresponding row R. A history field 89 is also provided in the memory array 80. The history field 89 includes a priority table 90 for each row R. The history field 89 and priority tables 90 hold information used to make replacement decisions in the register cache 52b.

During operation, the dispatch unit 18 attempts to dispatch up to two instructions per cycle. Before dispatch, the dispatch unit 18 determines how many source register values, not being recomputed in the execution unit 20, are needed from the register file 28. If no register values are needed, the register cache 52b is not accessed. If one register value is needed, the dispatch unit 18 applies the register address of the needed register value to the first compare circuit 84₁ of the register cache 52b. The compare circuit 84₁ then compares the received register address with the eight register addresses contained in the address fields 88 of the register cache 52b. If the compare circuit 84₁ generates a "hit", indicating one of the rows R₍₀₀₀₎ through R₍₁₁₁₎ contains the needed register value, then the compare circuit 84₁ activates the appropriate select input of the multiplexor 82₍₁₎. The multiplexor 82₍₁₎ then selects the data input corresponding to the hit address, and the register value is provided at the data output of the multiplexer 82₁ to the dispatch unit 18. If a miss occurs, meaning the needed register value is not in the register cache 52b, then the value is obtained from the register file 28. If the dispatch unit 18 requires two, three and/or four register values in a cycle, the above operation is performed in parallel with compare circuits 82₂, 83₂, and 82₄ and multiplexors 84₂, 84₃ and 84₄ respectively.

During the write portion of the cycle, any recomputed register values exiting the execution unit 20 are entered into the register cache 52b. When a new register value is inserted into a fully occupied register cache 52b, one of the preexisting register values needs to be victimized, i.e., removed from the register cache 52b to make room for the new entry. The victim may be selected in accordance with anyone of several known cache victimization policies, including least recently used or first-in-first-out. The history field 89 and priority tables 90 are used to implement these policies in a well known manner.

### C. SET ASSOCIATIVE

The register cache 52 can also be implemented using a set associative cache. Such a set associative implementation would combine aspects of the direct mapped and fully associative register caches. Generally, a set associative cache would divide the register file into two or more banks, where each bank is directly mapped. A first level of multiplexor circuits is required to select register values from each of the banks. A second level of multiplexing is required to pick one register value among the register values selected in the first level of multiplexing. History fields and priority tables are used to implement cache victimization policies. Since the design of a set associative register cache would be straight forward, given the teaching of the present invention and other caching principles known in the art, further detail is not provided herein.

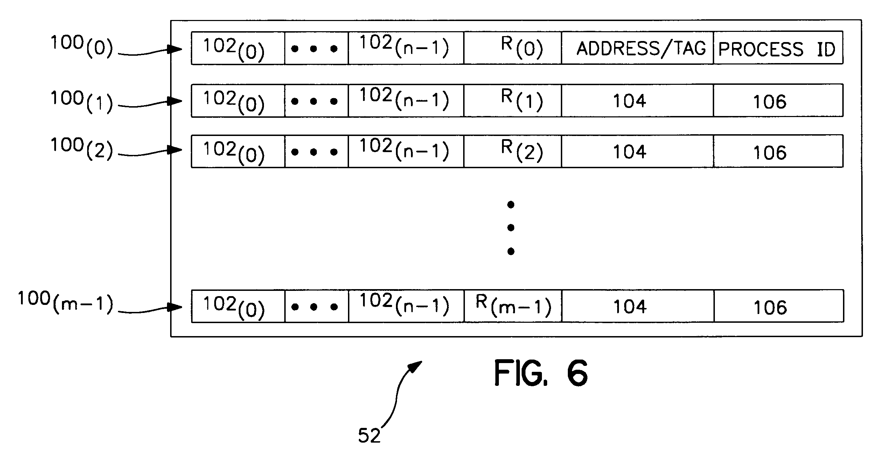

Referring to Figure 6, a register cache having a process identifier for each register cache entry is shown. The register cache 52 includes a number of register value entries 100₍₁₎ through 100₍ₘ₋₁₎ stored in rows R₀ through Rₘ₋₁ respectively. Each register value 100 entry includes a plurality (n) of memory cells 102₀ through 102ₙ₋₁, a tag/address field 104, and a process identifier field 106. The process identifier field 106 is used to hold an identifier which identifies the process a register value 100 is associated with.

The processor identifier field 106 is useful in a multi-context processor environment. In a multi-context environment, two (or more) processes can be active in the processor 50 at the same time. When one process is stalled due to a long-latency operation, the processor 50 switches and begins execution of the second process. A primary difficulty in context switching processor designs is that multiple copies of the register files are typically needed to enable fast access switching (i.e., a first register file for the first process and a second register file for the second process). The register cache 52, with the process identifier field 106, removes this obstacle. With the processor identifier field 106, the register cache 52 may simultaneously contain register values 100 generated by a first process and a second process, both active on processor 50. A register hit occurs when both the register tag/address and process identifier of the requested register value and the register value 100 entry in the register cache 52 are the same. If either the tag/address or the process identifier of a requested register value does not match one of the register value entries in the register cache 52, then amiss occurs. By adding the processor identifier field 106, there is no need to explicitly store register values 100 in the data cache 30 upon a context switching. Rather, victimized register values are stored in a memory such as data cache 30 when replaced in accordance with the replacement algorithm of the processor 50. Accordingly, context switching of the register cache 52 appears to be "instantaneous" to the processor 50.

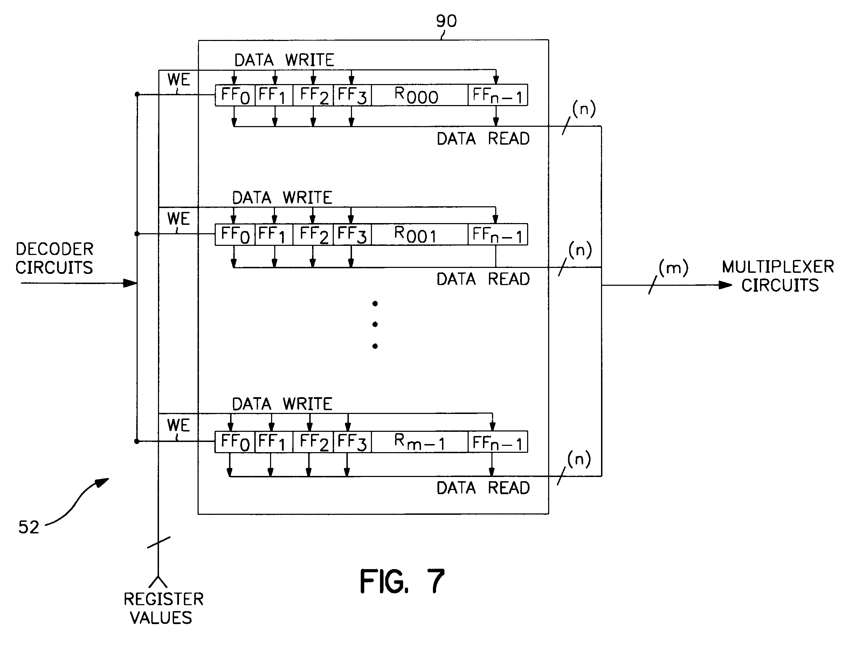

Referring to Figure 7, a register cache 52 is implemented using a flip flop memory array any according to another embodiment of the present invention is shown. The register cache 52 includes a memory array 90. The memory array 90 includes m rows R₍₀₀₀₎ through R₍ₘ₋₁₎ for storing m register values respectively. Each row R includes (n) flip flops FF₀ through FFₙ₋₁, where (n) equals the width of the word size used by the processor 50. The flip flop register cache 52 may be used in a direct mapped, fully associative, or set associative cache. During a read operation, the output of the (n) flip flops of a row R are read by the dispatch unit 18 after being selected by a multiplexor circuit (not shown). Alternatively, a register value is written into a row selected by a decoder circuit by asserting the write enable (WE) signal applied to the flip flops of the row. The selection of a row for reading and writing register values is essentially the same as that described above, and therefore is not repeated herein.

A number of advantages are realized by implementing the register cache 52 in a flip flop memory array. The average access time of a flip flop array is faster than an SRAM array because flip flops inherently operate faster. Further, the need for a multitude of word lines and a multitude of bit lines per memory location are avoided. Thus, the overall physical size of the flip flop array is much smaller than the prior art SRAM memory array 40 used to store the register file 28. All of these factors help reduce the processor 50 cycle time and reduce the size of the processor die. Further, the simplicity of the design reduces overhead and allows for processors of greater scalarity.

In another embodiment, the register cache 52 is implemented in a SRAM memory array on the processor chip. Since the SRAM array for a register cache 52 is much smaller than a SRAM array used to store the entire register file 28, the average access time for a register value is much faster. Further, the processor 50 is simplified, is easier to fabricate, and may be placed on a smaller die.

### ALTERNATIVE EMBODIMENTS

The register cache 52 of the present invention, regardless of the cache organization or memory technology, provides a number of advantages. Preliminary statistical studies indicate that the hit rate of the register cache is in the range of 90 to 95% or better. With such a high percentage of hits, it becomes feasible, according to various embodiments of the invention, to either: (1) maintain the register file 28 in a SRAM on the processor chip; (2) remove the register file 28 off the processor chip and store it in a separate memory chip; or (3) to do away with a dedicated memory for the register file 28 altogether. In this third embodiment, all of the register values in the register file 28 could be stored in the data cache 30. The actual embodiment used is a design choice of the user.

It should be noted that the above direct mapped, fully associative and set associative descriptions provided above are only exemplary. Other cache structures may be used. The number of entries in the register cache 52 may vary. The number of entries may include sixteen, thirty-two, or any other suitable number of entries. For the sake of simplicity, the invention was described with respect to a two scalar processor with one hundred and twenty eight registers (128). However, the register cache 52 is highly scalable, and may be used with processors having greater scalarity, such as four (z=4), five (z=5), six (z=6) or more pipelines. With the register cache, the size or number of entries in the register file 28 can be increased because the overhead associated with storing the entire register file on chip is substantially removed according to various embodiments of the present invention. Lastly, the register cache may be used with any processor architecture, including CISC, RISC or WLXIW.

Although the foregoing invention has been described in some detail, it will be apparent that certain changes and modifications may be practices within the scope of the attached claims. A number of changes and modifications can be made, without departing from the true spirit of the invention.

## Claims

1. A computer having a memory hierarchy including a register file of register values, the computer for executing instructions that specify certain source register values and certain destination register values from the register file, comprising:
a register cache for storing a subset of the register values from the register file.

2. The computer of claim 1, wherein the register cache is a set associative cache.

3. The computer of claim 1, wherein the register cache is a fully associative cache.

4. The computer of claim 1, wherein the register cache is a direct mapped cache.

5. The computer of claim 1, wherein the subset of the register values stored in the register cache are generated by recently executed instructions executed in a execution unit of the computer.

6. The computer of claim 1, wherein some of the subset of the register values stored in the register cache are further for providing register values to instructions before being dispatched to an execution unit of the processor.

7. The computer of claim 1, wherein the memory hierarchy includes a first memory for storing the register cache, a second memory for storing a data cache, a third memory for storing a main memory, and a disk memory.

8. The computer of claim 7, wherein the memory hierarchy further comprises a fourth memory for storing the register file, the fourth memory positioned between the first memory for storing the register cache and the second memory for storing the data cache.

9. The computer of claim 1, wherein the first memory for storing the register cache is implemented in a static random access memory array.

10. The computer of claim 1, wherein the first memory for storing the register cache is implemented in a memory array including a plurality of flip flops.

11. The computer of claim 10, wherein the plurality of flip flops are organized into a plurality of rows, wherein each one of the rows is used to store a selected one of the subset of the register values.

12. The computer of claim 1, further comprising a multiplexor for providing a selected register value from the subset of the register values stored in the register cache in response to a register address which corresponds to the selected register value.

13. The computer of claim 1, further comprising a select circuit for selecting in the register cache a location in which to write a selected register value from the register file.

14. The computer of claim 1, wherein each of the subset of register values stored in the register cache are accessed by a register address respectively.

15. The computer of claim 1, wherein selected register values of the subset of register values stored in the register cache are are replaced by new register values from the register file.

16. The computer of claim 15, wherein the selected register values are replaced in accordance with a least recently used policy.

17. The computer of claim 1, wherein the register cache further comprises a process identifier field for storing a process identifier for each one of the register values stored in the register cache.

18. The computer of claim 17, wherein a first selected one of the subset of register values stored in the register cache includes a first process identifier for associating the first selected register value with a first process and wherein a second selected one of the subset of register values stored in the register cache includes a second process identifier for associating the second selected register value with a second process.

19. The computer of claim 18, wherein the second selected register value remains in the register cache when the computer context switches to the first process and remains in the register cache until being replaced in accordance with a replacement policy of the computer.

20. A method of operating a computer having a memory hierarchy including a register file of register values, the computer executing instructions that specify certain source register values and certain destination register values from the register file, comprising the step of:
maintaining a subset of the register values of the register file in a register cache;

21. The method of claim 20, further comprising the step of storing a recomputed register value in the register cache after an instruction has been executed.

22. The method of claim 21, further comprising the step of replacing one of the register values stored in the register cache with the recomputed register value.

23. A method of providing a computer having a memory hierarchy including a register file of register values, the computer for executing instructions that specify certain source register values and certain destination register values from the register file, comprising the step of:
providing a register cache for storing a subset of the register values from the register file.
